# EUROPÄISCHE PATENTSCHRIFT

(11) **EP 0 626 628 B1**
(45) Veröffentlichungstag und Bekanntmachung des Hinweises auf die Patenterteilung: **17.12.1997**
(21) Anmeldenummer: 94106732.4
(22) Anmeldetag: 29.04.1994
(51) Int. Cl.: G05D 3/14, G05B 13/04, F15B 9/09, G05B 19/19

(54) **Steuerung für einen hydraulischen Antrieb**
Control system for a hydraulic drive
Système de commande pour un entraînement hydraulique

(30) Priorität: 11.05.1993 DE 4315626
(43) Veröffentlichungstag der Anmeldung: 30.11.1994
(73) Patentinhaber: Mannesmann Rexroth AG, 97813 Lohr am Main (DE)
(72) Erfinder: Ewald, Roland, D-97816 Lohr/Main (DE); Grimm, Andreas, D-81547 München (DE)

(56) Entgegenhaltungen:
- EP-A- 0 070 957
- DE-A- 2 607 818
- DE-A- 3 532 931
- GB-A- 2 111 253
- GB-A- 2 252 424
- US-A- 4 617 637
- US-A- 4 902 947
- REGELUNGSTECHNIK, Bd.32, Nr.9, September 1984, MüNCHEN, DE Seiten 309 - 316 A. FEUSER 'Entwurf von Zustandsreglern im Zeit- und Frequenzbereich für die Lageregelung eines ventilgesteuerten servohydraulischen Linearantriebes'
- öLHYDRAULIK UND PNEUMATIK, Bd.29, Nr.9, September 1985, MAINZ, DE Seiten 669 - 677 M. EGNER ET AL. 'Digitale, nichtlineare Regelungen und Identifikationsverfahren für elektrohydraulische Vorschubantriebe'

## Beschreibung

Die Erfindung betrifft eine Steuerung für einen hydraulischen Antrieb nach dem Oberbegriff des Anspruches 1.

Bei diesen bekannten Steuerungen wird die für die Regelung maßgebende Signalgröße über die Zeit nach dem Iterationsprinzip ermittelt und demgemäß so oft nachkorrigiert bis der Antrieb den gewünschten Sollwertverlauf durchführt. Diese bekannten Steuerungen sind praktisch nur für in einer kurzen Zeitspanne sich abspielende Steuerprogramme wegen der zeitaufwendigen empirischen Ermittlung des Sollwertverlaufes der Ventilöffnung einzusetzen. Für Antriebe mit einem längeren Bewegungsablauf werden deshalb Regeleinrichtungen eingesetzt, deren wesentliches Merkmal im Vergleich von Soll- und Istwert gleicher Zustandsgrößen wie Lage, Geschwindigkeit, Kraft oder Druck besteht. Um die Abweichung vom Soll- und Istwert (Amplitudenabfall und Phasennacheilung) möglichst gering zu halten, werden über Rechner dem Sollwert zusätzliche den Antrieb beeinflußende Größen aufsummiert. Für die Berechnung des zu korrigierenden Sollwertes wird die Frequenzanalyse angewandt.

Bei einem bekannten Regelverfahren wird bei der Berechnung des korrigierten Sollwertes für jede Regelachse die Frequenzanalyse angewandt. In einem Vorversuch (Identifikation) wird der Frequenzgang und damit das Übertragungsverhalten jeder servohydraulischen Regelachse bestimmt. Anschließend wird für die nachzufahrende Sollwertkurve ebenfalls eine Frequenzanalyse durchgeführt, um mit Hilfe des im Identifikationslaufes gewonnenen Übertragungsverhaltens die richtigen Sollwerte für die servohydraulischen Regelachsen berechnen zu können.

Die Berechnung des korrigierten Sollwertes muß dabei vor dem eigentlichen Versuchsdurchlauf erfolgen, wobei das gemessene Übertragungsverhalten und der daraus berechnete korrigierte Sollwert im digitalen Rechner abgespeichert werden.

Bei dem mathematischen Rechenprozeß für die Ermittlung des korrigierten Regelkreissollwertes ist zu beachten, daß die bei der Identifikation gewonnene Systemmatrix nicht direkt anwendbar ist. Es ist erforderlich, daß die Systemmatrix invertiert wird und die Sollwertkurve in den Frequenzbereich transformiert wird. Erst nach der mathematischen Berechnung im Frequenzbereich kann das berechnete Sollwertsignal in den Zeitbereich zurückgeführt werden. Die Berechnungsprogramme sind nur für ein bestimmtes Zeitfenster anwendbar.

Eine zeitliche längere Sollwertkurve muß deshalb in entsprechende zeitliche Einzelschritte zerlegt werden. Eine Übereinstimmung zwischen Soll- und Istwert ist nach der ersten Sollwertberechnung nicht zu erwarten. Eine bessere Annäherung wird durch weitere Berechnungsgänge für den korrigierten Sollwert erzielt. Dabei wird als Referenz für den Soll-Istwertvergleich auf den Istwertverlauf des letztgefahrenen Versuches zurückgegriffen.

Mit diesen bekannten Regel- und Berechnungsverfahren lassen sich zufriedenstellende Ergebnisse erreichen, wenn z.B. für eine Wegregelung (Zylinderantrieb), bei der die Geschwindigkeitsanteile einen dominanten Anteil haben und sich der Lastdruck nur in kleineren Bereichen ändert, die Anteile der Ölkompression durch geringe dynamische Kraft- und Laständerungen am Verbraucher prozentual klein sind und die Lastdruckänderung für den gesamten Frequenzbereich der Strecken-Identifikation als auch im gesamten Frequenzbereich der vorgegebenen Sollwertkurve identisch sind.

Für Regelungen, bei denen die Kraft- und damit Druckänderungen dynamisch sehr schnell erfolgen, oder bei Regelungen mit höherer Dynamik und damit höherem dynamischen Massenanteil, liefert dieses bekannte Regel- und Berechnungsverfahren nur noch bedingt brauchbare Ergebnisse, da kein linearer Zusammenhang zwischen Durchflußmenge und Ventilöffnung besteht und die Anteile der ölkompression hier einen dominanten Einfluß haben können. Die richtige mathematische Bewertung der Anteile der Ölkompression wird bei Zylinderantrieben dadurch erschwert, daß zu jedem Zeitpunkt auch das zugehörige zu komprimierende Ölvolumen und damit die Stellung der Zylinderkolbenstange in die Berechnung eingesetzt werden muß.

Bei außermittiger Kolbenstellung und die damit verbundenen unterschiedlichen Ölmengen in den Zylinderräumen und unterschiedliche Leitungsvoluminas zwischen Ventil und Zylinder ergeben an den Steuerkanten an dem Servo- bzw. Steuerventil unterschiedliche Durchflußwerte. Für die Berechnung der richtigen Ventilöffnung muß auch der aktuelle Druckabfall an den Steuerkanten eingesetzt werden.

Dies gilt auch bei zustands geregelten Antriebssystemen entsprechend den Aufsätzen ,,Entwurf von Zustandsreglern im Zeit- und Frequenzbereich für die Lageregelung eines ventilgesteuerten servohydraulischen Linearantriebs" von A. Feuser in der Zeitschrift ,,Regelungstechnik", 1984, Seiten 309 - 316; "Automatisierte Inbetriebnahme zustandsgeregelter Antriebssysteme" von Günter Pritschow und Rainer Hagl, in Ölhydraulik und Pneumatik 34 (1990) Nr. 8. S. 544 bis 547 sowie bei digitalen, nichtlinearen Regelungen und Identifikationsverfahren gemäß dem Aufsatz "Digitale, nichtlineare Regelungen und Identifikationsverfahren für elekrohydraulische Vorschubantriebe" von M. Egner und G. Keuper, in Ölhydraulik und Pneumatik 29 (1985) Nr. 9, S. 669 bis 677. Mit diesen Regelungen läßt sich gegenüber einfachen Reglern der Nachlauffehler verringern. Ganz ausschalten insbesondere bei hohen und schnellen Last- und Geschwindigkeitsänderungen läßt sich der Regelfehler nicht.

Die Aufgabe der Erfindung besteht darin, die Ansteuerung von hydraulischen Antrieben nach einem vorgegebenen Sollwertverlauf zu verbessern, bei der zeitaufwendige Optimierungsläufe mit mehreren Versuchsdurchläufen unterbleiben können und der Istwertverlauf dem Sollwertverlauf für die Bewegung des hydraulischen Antriebes weitgehend entspricht. Dies wird mit den kennzeichnenden Merkmalen des Anspruches 1 erreicht.

Anstelle gemessener Zustandsgrößen simulierte Zustandsgrößen für die fortlaufende Berechnung des Ventilsollwertes zu verwenden, hat den Vorteil, daß auf Sensoren zur meßtechnischen Erfassung der Zustandsgrößen verzichtet werden kann. Vorteilhaft erweist es sich, wenn die simulierten Zustandsgrößen parallel zu den gemessenen Zustandsgrößen laufen, so daß bei Ausfall eines Sensors oder bei Überschreitung eines vorgegebenen Grenzwertes (Bandbreite) für die gemessenen Zustandsgrößen, das auf eine Störung der Steuerung schließen läßt, auf die betreffenden simulierten Zustandsgrößen für die Sollwertberechnung zurückzugreifen ist.

Weitere Ausgestaltungen der Erfindung ergeben sich aus den weiteren Ansprüchen sowie aus der Beschreibung eines Ausführungsbeispiels.

Durch die zeitlich vorausschauende Sollwertberechnung für die Bewegung des Antriebes tritt ein Nachlauffehler überhaupt nicht auf. Die ständige Einbindung der aktuellen Betriebszustände des Antriebssystems in die fortlaufende Sollwertberechnung berücksichtigt die physikalischen Einflüsse der Ölkompression und der nicht linearen Lastdruckabhängigkeit mathematisch exakt.

Ferner werden bei der Ventil-Sollwertberechnung auch die für einen exakten Beschleunigungs- bzw. Kraft- oder Druckverlauf so wichtigen Einflüsse wie plötzliche Lastdruckänderungen an den Steuerkanten bei Nulldurchgang des 4-Wege-Regelventils, lastdruckabhängige Null-Leckage des Servoventils sowie lastdruckabhängige Leckage hydrostatisch gelagerter Servozylinder berücksichtigt.

Bei ein- und mehrachsigen Regelkreisen werden die auf die servohydraulische Regelachse einwirkenden dynamischen Kräfte oder auch Drücke vorausschauend On-Line berechnet. Bei mehrachsigen Systemen wird die Kraftverkoppelung der Achsen untereinander durch einen Geometrierechner ermittelt. Die dynamischen Kräfte oder auch Drücke jeder servohydraulischen Achse werden bei der Ventil-Sollwertberechnung mathematisch berücksichtigt. Der Lastdruck und äußere Kräfte werden in jedem Rechenschritt meßtechnisch bestimmt und bei der Sollwertberechnung ständig berücksichtigt. Für einen weiteren Frequenzbereich ergeben sich dadurch konvergierende Lösungen.

Der zusätzliche Lage-, Kraft bzw. Druckregelkreis hat nur die Aufgabe, den Zylinder wegmäßig bzw. kraft- oder druckmäßig zu fesseln, wenn Fehler - auch Langzeitfehler - in der Ventil-Sollwertberechnung vorliegen würden (nicht aktiv bei richtiger Sollwertberechnung).

In der Zeichnung veranschaulicht
- Figur 1: den Schaltplan einer erfindungsgemäßen Steuerung für einen Hydrozylinder mit durchgehender Kolbenstange,
- Figur 2: die schematische Darstellung eines als Hydrozylinder mit durchgehender Kolbenstange ausgebildeten hydraulischen Antriebs und
- Figur 3: ein Diagramm des Sollwertverlaufs einer Beschleunigungskurve eines hydraulischen Antriebs nach den Figuren 1 und 2.

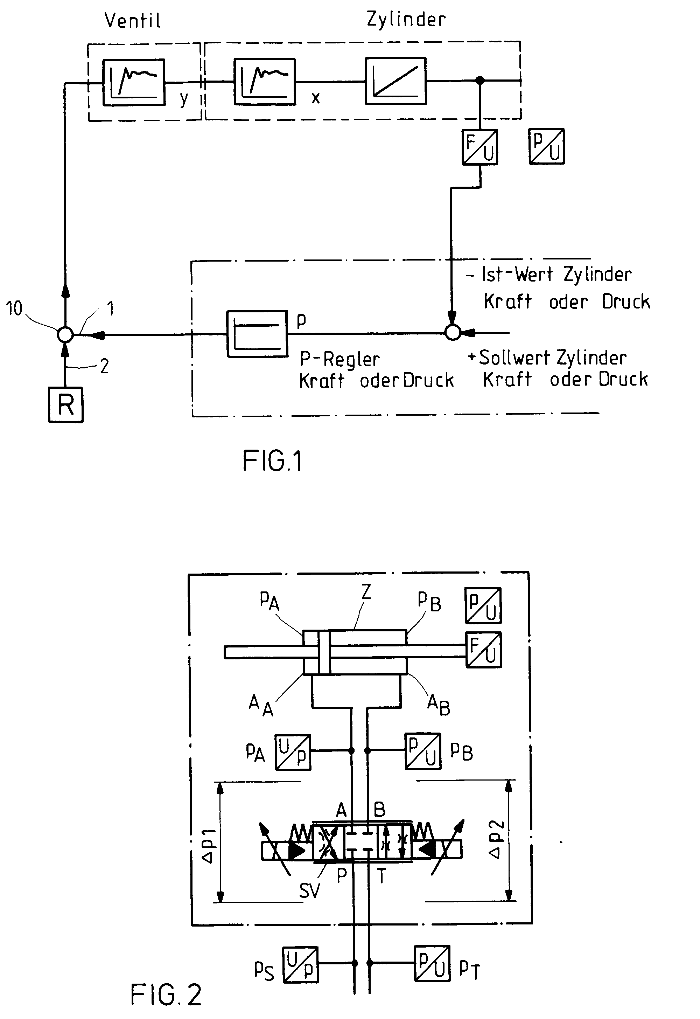

Gemäß Figuren 1 und 2 wird in einem Rechner R beispielsweise einem Transputer aus dem vorgegebenen Sollwertverlauf der Beschleunigung, Kraft bzw. Druck des Zylinders ständig der Sollwert für die Zylindergeschwindigkeit, der Sollwert für den Zylinderweg sowie die auf den Zylinder Z einwirkenden dynamischen Kräfte, die sich aus dem Sollwertverlauf der Beschleunigung, Kraft bzw. Druck und den zugehörigen Massen des Antriebes ergeben, berechnet.

Ferner erfolgt eine ständige Berechnung der aktuellen Druckdifferenz (Kraftdifferenz) am Zylinder Z oder Ölmotor auf der Grundlage der gemessenen oder simulierten Zylinderkammerdrücke PA und PB in den Zylinderräumen AA, AB und eine ständige Berechnung der aktuellen Steuerkantendruckabfälle ΔP1 und ΔP2 am Servoventil SV auf der Grundlage der gemessenen oder simulierten Zylinderkammerdrücke PA und PB und des Systemdruckes PS und Tankdruckes PT - Doppelfunktion der gemessenen Zylinderkammerdrücke -. Das Messen bzw. die Simulation der Zylinderkammerdrücke PA und PB ist für die Lastdruckermittlung und des Druckabfalls an den Steuerkanten des Ventils SV erforderlich. Das Messen bzw. die Simulation des Systemdruckes PS und des Tankdruckes PT ist nur erforderlich, wenn diese Zustandsgrößen nicht konstant sind. Ständig gemessen werden auch die Istwerte vom Zylinderweg S bzw. von der Kraft F oder dem Druck P und der Beschleunigung am bzw. im Arbeitszylinder.

Aus den vorliegenden Soll- und Istwerten wird unter Berücksichtigung des Übertragungsverhaltens des Systems "Servohydraulische Achse" ständig ein Ventilsollwert berechnet, der am Eingang 2 eines Summiergliedes 10 eingespeist wird. Die Berechnung des Ventilsollwertes wird nach bekannten mathematischen und physikalischen Zusammenhängen unter Einbeziehung der stets aktuellen, gemessenen oder simulierten Systemdaten der servohydraulischen Achse für die fortlaufende Soll- und Istkurve on-line ständig durchgeführt.

Bei der Berechnung jedes Ventilsollwertes werden berücksichtigt:

Die aktuellen gemessenen oder simulierten Kammerdrücke PA, PB, PS und PT,
der aktuell gemessene Zylinderweg S bzw. die aktuell gemessene Kraft F oder der Druck P am bzw. im Arbeitszylinder Z,
die erforderlichen Durchflußmengen für die Sollgeschwindigkeit und für die erforderliche Ölkompression,
der Einfluß der Lastdruckänderung im Nulldurchgang des 4-Wege-Servoventils SV,
der Einfluß des Nulldurchflusses des 4-Wege-Servoventils in Abhängigkeit der Lastdruckdifferenz aus PA und PB,
der Einfluß der inneren und äußeren Leckagen hydrostatisch-gelagerter Servozylinder in Abhängigkeit der Lastdruckdifferenzen und aktuellen Kammerdrücke,
der Einfluß der Ventildynamik und der Dynamik der Regelstrecke,
sowie die stets aktuellen, statischen Kräfte und dynamischen Massenkräfte, die auf den Zylinder Z einwirken. Dabei werden aus den Messungen oder Simulationen der aktuellen Kammerdrücke PA und PB ständig die statischen Last- und Kraftdruckdifferenzen ermittelt,
der dynamische Massenanteil wird mittels einer Parameterbestimmung durch Messung oder Simulation der Kammerdrücke und der Istbeschleunigung ermittelt,
die Zeitverzögerung am Servoventil SV und der Meßsignale wird durch Voraus berechnung der Ventil-Sollwerte und rechtzeitige Ausgabe kompensiert.

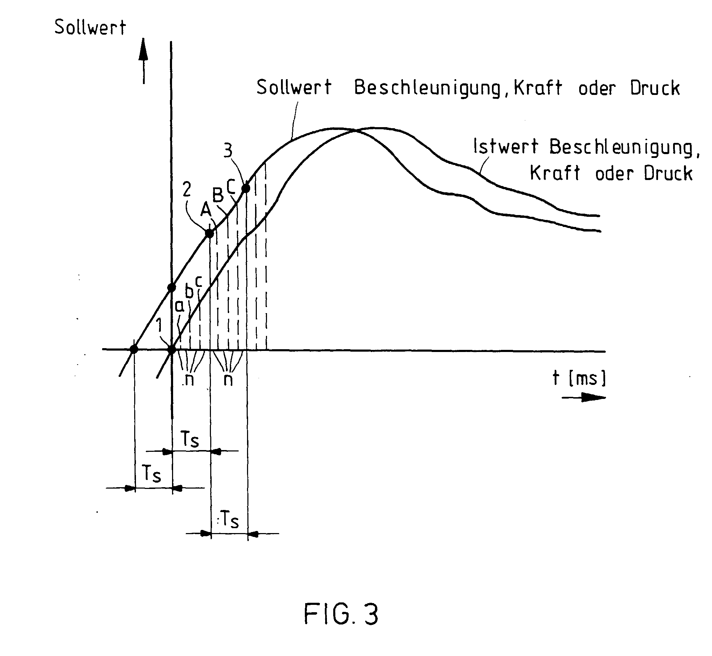

Da es sich im vorliegenden Fall um eine On-Line-Berechnung handelt, muß sichergestellt sein, daß für den Meßzeitpunkt 1 (0 ms) nach Figur 3 der dem Beschleunigungs-, Kraft oder Druck-Sollwert des Zylinders zugeordnete Ventilsollwert für den Zeitpunkt 2 berechnet und zu diesem Zeitpunkt dem Steuersystem nach Figur 1 dem Summierglied 10 zugeführt wird. Die Ausgabe des Ventilsollwertes für den Zeitpunkt 2 muß zeitlich im Bereich vor der Zeitkonstante Ts des Regelsystems liegen. Um die Sollwertkurve mit genügender Genauigkeit berechnen zu können, wird diese in n-Einzelschritte unterteilt, d.h., im Zeitbereich TS, der der Zeitkonstante entspricht, erfolgen nach Figur 3 vier Sollwertberechnungen auf der Grundlage der entsprechenden Meß- oder Simulationswerte, also außer der Sollwertberechnung für den Zeitpunkt 2 noch drei weitere Sollwertberechnungen für die Zeitpunkte A, B und C auf der Grundlage entsprechender Meß- oder Simulationswerte a, b, c, wobei für diese Zwischen-Rechenschritte die Festwerte zugrunde gelegt werden wie sie für den Sollwert für Punkt 2 festgelegt sind. Die Rechengenauigkeit wird noch weiter erhöht, wenn der Sollkurvenverlauf nach der Zeit TS, also nach Zeitpunkt 2 bzw. 3 durch weitere Rechenschritte TS, mit Unterteilung n in die mathematische Berechnung für den Sollwert zum Zeitpunkt 2 mit einbezogen wird. Für die Berechnung des Sollwertes 2 auf der Grundlage des Meß- bzw. Simulationswertes 1 werden die Daten des Sollwertes 3 mit einbezogen. Für die Genauigkeit des zu erwartenden Ergebnisses ist es erforderlich, daß die Rechenzeit kurz und konstant ist. Deshalb werden die Rechenoperationen der n-Teilschritte zeitlich parallel, durch Einsatz von parallelarbeitenden Transputern oder schnellen Rechnern, durchgeführt. Die Gesamtrechenzeit für einen auszugebenden Ventilsollwert liegt unter 1 ms.

Im Wege-, Kraft- oder Druckregelkreis nach Figur 1 wird der gemessene Wege-, Kraft- oder Druck-Istwert des Zylinders mit dem bereits um die Zeitkonstante des Regelsystems vorher berechneten Wege-, Kraft- oder Druck-Sollwert eingelesen und verglichen. Der Wege-, Kraft- oder Druck-Sollwert wird zwischenzeitlich in einem Ringspeicher festgehalten. Bei richtig berechnetem Ventilsollwert 2 wird am Reglerausgang 1 kein Signal anstehen (Figur 1). Der Wege-Regelkreis hat nur die Aufgabe, Langzeitfehler auszugleichen, d.h., lagemäßige Fesselung des Zylinders. Das gleiche gilt, wenn die Steuerung für einen Kraft- oder Druckverlauf eines Hydrozylinders oder Hydromotors bestimmt ist. In diesem Fall wird einem Kraft- oder Druckregelkreis die gemessene Istkraft bzw. der gemessene Ist-Druck zugeführt und dort mit den eingegebenen berechneten Sollwerten von Kraft- bzw. Druck verglichen.

Die Genauigkeit des Ergebnisses wird zusätzlich On-Line durch ständige Überprüfung der Parameter für die Sollwertberechnung verbessert. Bei Soll-Istwertdifferenzen wird in den Rechenalgorithmus so eingegriffen, daß für nachfolgende Sollwertberechnungen sich eine kleinere Soll-Istwertabweichung ergibt. Diese Korrektur der Parameter wird solange fortgesetzt, bis der Fehler in einem zugelassenen Fehlerfenster liegt.

## Patentansprüche

1. Steuerung eines von einem Arbeitsfluid druckbeaufschlagten Antriebes (Z), wobei das Arbeitsfluid über ein elektrisch angesteuertes Ventil (SV) zur Festlegung der den Antrieb zuzuführenden Arbeitsfluidmenge geführt ist und das elektrische Signal (2) zur Ansteuerung des Ventils (SV) von einer Rechenvorrichtung (R) ausgegeben wird, **dadurch gekennzeichnet,** daß die Rechenvorrichtung (R) mit hoher Rechengeschwindigkeit aus einem in der Rechenvorrichtung (R) eingegebenen Sollwertverlauf für die Bewegung oder für die Kraft bzw. für den Druck des Antriebes (Z) fortlaufend einen Ventilsollwert on-line unter Berücksichtigung des Übertragungsverhaltens des hydraulischen Systems berechnet, die Berechnung des Ventilsollwertes zumindest auf eine gemessene oder simulierte Zustandsgröße des Antriebes (Z) zum Zeitpunkt der Berechnung beruht und der berechnete Ventilsollwert die Stellgröße des an das Ventil (SV) weitergeleiteten elektrischen Signals (2) bestimmt, wobei die Ausgabe des Ventilsollwertes aus der Rechenvorrichtung (R) für den jeweiligen nächsten Zeitpunkt in einem Zeitbereich erfolgt, der um den Betrag der Zeitkonstante (TS) des Steuersystems vor diesem nächsten Zeitpunkt liegt.

2. Steuerung nach Anspruch 1, **dadurch gekennzeichnet,** daß die simulierten Zustandsgrößen parallel zu den gemessenen Zustandsgrößen laufen und bei Ausfall eines Sensors oder bei Überschreitung eines vorgegebenen Grenzwertes (Bandbreite) für die gemessenen Zustandsgrößen auf die betreffenden simulierten Zustandsgrößen für die Sollwertberechnung zurückgegriffen wird.

3. Steuerung nach Anspruch 1, **dadurch gekennzeichnet,** daß als Zustandsgröße zumindest der zwischen Ventil und Arbeitsraum des Antriebs herrschende Druck (PA, PB) des dem Antrieb zugeführten Arbeitsfluids zur Berechnung des jeweiligen Sollwertes zugrunde gelegt wird.

4. Steuerung nach einem der vorherigen Ansprüche, **dadurch gekennzeichnet,** daß die Druckdifferenz des Arbeitsfluids zwischen Zu- und Rückfluß am Antrieb als Zustandgröße die Grundlage zur Berechnung des jeweiligen Sollwertes bildet.

5. Steuerung nach einem der vorheringen Ansprüche, **dadurch gekennzeichnet,** daß die am Ventil auftretenden Druckdifferenzen (ΔP1, ΔP2) als Zustandsgrößen die Grundlage der Berechnung für den jeweiligen Sollwert bildet.

6. Steuerung nach einem der vorherigen Ansprüche, **dadurch gekennzeichnet,** daß zu den gemessenen oder simulierten Zustandsgrößen weitere Druckwerte für den Zeitraum der Zeitkonstante des Systems berechnet und den gemessenen oder simulierten Werten aufaddiert werden.

7. Steuerung nach einem der vorherigen Ansprüche, **dadurch gekennzeichnet,** daß das dem Ventil (SV) zugeführte Signal über ein Summierglied (10) geführt ist, dem über einen zweiten Eingang (1)das Ausgangssignal eines den Antrieb einbindenden Wege-, Kraft- oder Druckregelkreises zugeführt wird.

8. Steuerung nach einem der vorherigen Ansprüche, **dadurch gekennzeichnet,** daß die Bewegung des Antriebes als Beschleunigungs-, Geschwindigkeits-, Kraft-, Druck- oder Wegverlauf als Sollwert vorgegeben ist.

9. Steuerung nach einem der vorherigen Ansprüche, **dadurch gekennzeichnet,** daß der Beschleunigungs-, Kraft- oder Druckverlauf über die Zeiteinheit (TS) die Ventilöffnung bei gegebener am Öffnungsquerschnitt vorherrschender Druckdifferenz zur Erzielung der daraus sich ergebenden Sollgeschwindigkeit des Antriebes entsprechenden Arbeitsfluidmenge bestimmt.

10. Steuerung nach einem der vorherigen Ansprüche, **dadurch gekennzeichnet,** daß bei Beschleunigungs-, Kraft- oder Druckänderungen die daraus sich ergebenden Kompressionsmengen sowie die infolge der am Antrieb auftretenden vom Druck in den Arbeitskammern (AA, AB) des Antriebes abhängigen Leckagedurchflußmengen in die Berechnung für die Ventilöffnung mit einbezogen werden.

11. Steuerung nach einem der vorherigen Ansprüche, **dadurch gekennzeichnet,** daß in die Berechnung die Ventildurchflußkennlinie und das Übertragungsverhalten des Ventils einbezogen wird.

12. Steuerung nach einem der vorherigen Ansprüche, **dadurch gekennzeichnet,** daß aus dem Beschleunigungs-, oder Geschwindigkeitssollwert der Lage-Sollwert des Antriebes berechnet wird und in einem Ringspeicher mindestens entsprechend der Zeitkonstante des Systems gespeichert wird, bevor der Lage-Sollwert einem Regelkreis zugeführt wird und das Ausgangssignal des Regelkreises zur Korrektur über ein Summierglied dem zweiten Sollwerteingang zugeführt wird.

13. Steuerung nach einem der vorherigen Ansprüche, **dadurch gekennzeichnet,** daß der Wege-, Kraft- oder Druck-Sollwert des Antriebes berechnet wird und in einem Ringspeicher mindestens entsprechend der Zeitkonstante (TS) des Systems gespeichert wird, bevor der Wege-, Kraft-, oder Druck-Sollwert einem Regelkreis zugeführt wird und das Ausgangssignal (1) des Regelkreises zur Korrektur über ein Summierglied (10) einem weiteren Sollwerteingang (2) zugeführt wird.

14. Steuerung nach einem der vorherigen Ansprüche, **dadurch gekennzeichnet,** daß der Antrieb aus einem oder mehreren hydraulischen Antrieben (Z) besteht.

15. Steuerung nach einem der vorherigen Ansprüche, wobei der Antrieb von mehreren Arbeitszylindern oder Arbeitsmotoren gebildet wird, **dadurch gekennzeichnet,** daß für jeden Arbeitszylinder getrennt dessen für die Sollwertberechnung erforderlichen Zustandsgrößen und Parameter aus einer räumlichen Bewegungsgeometrie berechnet werden.

16. Steuerung nach einem der vorhergenden Ansprüche, **dadurch gekennzeichnet,** daß das Arbeitsfluid aus Hydrauliköl besteht.

17. Steuerung nach einem der vorhergehenden Ansprüche, **dadurch gekennzeichnet,** daß die dem Ventil zugeführten Sollwertsignale digital berechnet sind und über einen D/A-Wandler als Stellsignale dem Ventil zugeführt werden.

18. Steuerung nach einem der vorhergehenden Ansprüche, **dadurch gekennzeichnet,** daß die analog aufgenommenen Drucksignale dem Rechner in digital umgewandelte Signale zugeführt werden.

19. Steuerung nach Anspruch 1, **dadurch gekennzeichnet,** daß die Rechenzeit für die einzelnen Sollwertabschnitte des Sollwertkurvenverlaufes konstant ist.

20. Steuerung nach Anspruch 1, **dadurch gekennzeichnet,** daß die Rechenoperationen von parallel geschalteten Rechnern (R) durchgeführt werden.

21. Steuerung nach einem der vorhergehenden Ansprüche, **dadurch gekennzeichnet,** daß bei Auftreten einer Soll-Istwertdifferenz des Wege-, Kraft- oder Druckregelkreises über einen zugelassenen Wert, diese über mehrere Sollwertabschnitte hinweg verteilt wieder auf den zugelassenen Wert zurückgeführt bzw. der Fehler verringert wird.

22. Steuerung nach einem der vorhergehenden Ansprüche, **dadurch gekennzeichnet,** daß die Berechnung des vom Rechner (R) ermittelten dem Sollwert des Zylinders zugeordneten Ventilsollwertes auf einem gemessenen oder simulierten Wert beruht, der zeitlich um den Betrag der Zeitkonstante (TS) des Steuersystems zurückliegt.

23. Steuerung nach Anspruch 22, **dadurch gekennzeichnet,** daß im Zeitbereich der Zeitkonstante (TS) des Steuersystems mehrere gleiche Zeitabstände (n) aufweisende Rechenschritte (A, B, C) auf der Grundlage der jeweiligen gemessenen oder simulierten Werte (a, b, c) durchgeführt werden.

24. Steuerung nach den Ansprüchen 20 und 21, **dadurch gekennzeichnet,** daß zur Berechnung des Ventilsollwertes im Zeitkonstantentakt auch der Sollwertverlauf der Sollkurve des Antriebes mit einbezogen wird, der zeitlich außerhalb des Bereiches der Zeitkonstante (TS) des Antriebes liegt, der für die Berechnung bestimmt ist, und zwar im Sinne einer Vorauseilung des Sollwertverlaufes.

## Claims

1. Control system for a drive(Z) pressurised by a work fluid, the work fluid being passed through an electrically driven valve (SV) for determination of the rate of flow of work fluid to be fed to the drive, and whereby the electrical signal (2) for driving the valve (SV) is emitted by a computer device (R), **characterised in that** the computing device (R) continuously computes on-line at high speed and taking into account the transmission characteristics of the hydraulic system a valve command value from a command value curve input into the computing device (R) for the movement or the force, respectively pressure of the drive (Z), the calculation of the valve command value being based at least on one measured or simulated state variable of the drive (Z) at the time of the calculation, and the calculated valve command value determining the manipulated variable of the electrical signal (2) being passed on to the valve (SV), whereby the output of the valve command value from the computing device (R) for the respective following period occurs within a time period preceding the said following period by the magnitude of the time constant (TS) of the control system.

2. Control system according to Claim 1, **characterised in that** the simulated state variables run parallel to the measured state variables and that in the event of a failure of a sensor or when a limit value (bandwidth) for the measured state variables is exceeded, the system resorts to the respective simulated state variable for calculation of the command value.

3. Control system according to Claim 1, **characterised in that** at least the pressure (PA, PB) prevailing between the valve and the drive's work chamber in the work fluid fed to the drive is taken as the basis for calculation of the respective command value.

4. Control system according to any of the preceding claims, **characterised in that** the pressure differential of the work fluid between the inlet and outlet of the drive constitutes, as a state variable, the basis for calculation of the respective command value.

5. Control system according to any of the preceding claims, **characterised in that** the pressure differentials (ΔP1, ΔP2) occurring at the valve constitute, as state variables, the basis for calculation of the respective command value.

6. Control system according to any of the preceding claims, **characterised in that,** in addition to the measured or simulated state variables, further pressure values are calculated for the time period of the time constant and added to the measured or simulated values.

7. Control system according to any of the preceding claims, **characterised in that** the signal fed to the valve (SV) is passed through a summation element (10), to which the output signal of a position, force or pressure control loop including the drive is fed in via a second input (1).

8. Control system according to any of the preceding claims, **characterised in that** the movement of the drive is predetermined as an acceleration, velocity, force, pressure or travel curve as a command value.

9. Control system according to any of the preceding claims, **characterised in that** the acceleration, force or pressure curve over the time unit (TS) determines the valve's degree of opening for a given pressure differential at the opening cross-section with a view to obtaining the resulting command velocity of the corresponding work fluid flow of the drive.

10. Control system according to any of the preceding claims, **characterised in that,** in the event of changes in the acceleration, force or pressure, the resulting compression rates as well as the leakage flow rates occurring as a result of the pressure prevailing in the work chambers (AA, AB) are included in the calculation for the degree of valve opening.

11. Control system according to any of the preceding claims, **characterised in that** the valve flow characteristic and the valve transmission characteristic are included in the calculation.

12. Control system according to any of the preceding claims, **characterised in that** the position command value of the drive is calculated from the acceleration or velocity command value and is stored in a ring memory at least corresponding to the time constant of the system before the position command value is fed to a control loop and the output signal of the control loop is fed as a correction factor into the second control signal input via a summation element.

13. Control system according to any of the preceding claims, **characterised in that** the position, force or pressure command signal of the drive is calculated and stored in a ring memory at least corresponding to the time constant (TS) of the system before the position, force or pressure command signal is fed to a control loop and the output signal (1) of the control loop is fed to a further command signal input (2) via a summation element (10).

14. Control system according to any of the preceding claims, **characterised in that** the drive consists of one or more hydraulic drives (Z).

15. Control system according to any of the preceding claims, whereby the drive is formed by several work cylinders or work motors, **characterised in that** the state variables and parameters required for calculation of the command value are calculated separately for each work cylinder from a spatial motion geometry.

16. Control system according to any of the preceding claims, **characterised in that** the work fluid consists of hydraulic oil.

17. Control system according to any of the preceding claims, **characterised in that** the command values fed to the valve are calculated digitally and fed as actuation signals to the valve through a D/A converter.

18. Control system according to any of the preceding claims, **characterised in that** the analogue pressure signals registered are fed to the computer as converted digital signals.

19. Control system according to Claim 1, **characterised in that** the computing time for the individual command value steps in the command value curve is constant.

20. Control system according to Claim 1, **characterised in that** the computing operations are executed by computers (R) connected in parallel.

21. Control system according to any of the preceding claims, **characterised in that** upon the occurrence of a command/actual difference in the position, force or pressure control loop beyond a permissible limit, this difference is returned to the permissible value, or the error reduced, over several command value steps.

22. Control system according to any of the preceding claims, **characterised in that** the calculation of the valve command value determined by the computer (R) and allocated to the cylinder command value is based on a measured or simulated value which lies further back in time by the magnitude (TS) of the control system time constant.

23. Control system according to Claim 22, **characterised in that** within the time period of the control system constant (TS) several calculation steps (A, B, C) having identical time intervals (n) are executed on the basis of the respective measured or simulated values (a, b, c).

24. Control system according to Claims 20 and 21, **characterised in that,** for the calculation of the valve command signal as clocked by the time constant, the command value profile of the drive's command curve, which in terms of time lies outside the range of the time constant (TS) of the drive that is designated for calculation is also included, in sense of an overshoot of the command signal curve.

## Revendications

1. Une commande pour un entraînement (Z) soumis à la pression d'un fluide de travail, cependant que le fluide de travail est mené au travers d'une valve (SV) à commande électrique pour fixer le volume de fluide de travail à mener vers l'entraînement et que le signal électrique (2) de commande de la valve (SV) est émis par un dispositif calculateur (R), **caractérisée en ce que** le dispositif calculateur (R) calcule en continu, en temps réel, avec une vitesse de calcul élevée, en tenant compte du comportement de transmission du système hydraulique, une valeur consigne de la valve à partir d'une donnée en entrée du dispositif calculateur (R) sous forme de profil de variation de la valeur consigne en termes de mouvement ou alors de force ou de pression de l'entraînement (Z) selon le cas, que le calcul de la valeur consigne de la valve est basé sur au moins une valeur d'état mesurée ou simulée pour l'entraînement (Z) au moment du calcul et que la valeur consigne calculée de la valve détermine la valeur de commande du signal électrique (2) transmis à la valve (SV), cependant que l'émission pour le temps suivant correspondant de la valeur consigne de la valve par le dispositif calculateur (R) est effectuée dans un intervalle de temps précédant ce temps suivant d'une valeur égale à la constante de temps (TS) du système de commande.

2. Une commande conforme à la revendication n° 1, **caractérisée en ce que** les valeurs d'état simulées vont de pair avec les valeurs d'état mesurées et que, lors d'une panne de capteur ou lorsque les valeurs d'état mesurées dépassent une valeur limite prédéterminée (largeur de la bande passante), les valeurs d'état simulées correspondantes sont sollicitées pour le calcul de la consigne.

3. Une commande conforme à la revendication n° 1, **caractérisée en ce que** au moins la pression (PA, PB) régnant entre la valve et la chambre de travail de l'entraînement, dans le fluide de travail alimenté vers l'entraînement, est utilisée comme valeur d'état à la base du calcul de la valeur consigne correspondante.

4. Une commande conforme à une des revendications précédentes, **caractérisée en ce que** la différence de pression du fluide de travail entre l'alimentation de l'entraînement et son échappement constitue la valeur d'état utilisée comme base pour le calcul de la consigne correspondante.

5. Une commande conforme à une des revendications précédentes, **caractérisée en ce que** les différences de pression (ΔP1, ΔP2) régnant au niveau de la valve constituent les valeurs d'état utilisées comme base pour le calcul de la consigne correspondante.

6. Une commande conforme à une des revendications précédentes, **caractérisée en ce que** des valeurs de pression supplémentaires aux valeurs d'état mesurées ou simulées sont calculées pour l'intervalle de temps correspondant à la constante de temps du système, puis rajoutées aux valeurs mesurées ou simulées.

7. Une commande conforme à une des revendications précédentes, **caractérisée en ce que** le signal transmis à la valve (SV) est mené au travers d'un élément sommateur (10), auquel est transmis par une seconde entrée (1) le signal de sortie d'une boucle d'asservissement de position, de force ou de pression à laquelle est relié l'entraînement.

8. Une commande conforme à une des revendications précédentes, **caractérisée en ce que** le mouvement de l'entraînement est défini par une valeur consigne sous forme de profil de variation de l'accélération, de la vitesse, de la force, de la pression ou de la course.

9. Une commande conforme à une des revendications précédentes, **caractérisée en ce que** le profil de variation de l'accélération, de la force ou de la pression en fonction de l'unité de temps (TS) détermine, pour une différence de pression donnée régnant au niveau de la section d'ouverture, l'ouverture de valve requise pour obtenir le débit du fluide de travail qui donnera la vitesse de l'entraînement correspondant à la valeur consigne.

10. Une commande conforme à une des revendications précédentes, **caractérisée en ce que** sont pris en considération dans le calcul de l'ouverture de la valve d'une part les volumes de compression résultant de variations de l'accélération, de la force ou de la pression et d'autre part les débits de fuite apparaissant au niveau de l'entraînement selon la pression régnant dans les chambres de travail (AA, AB) de l'entraînement.

11. Une commande conforme à une des revendications précédentes, **caractérisée en ce que** sont pris en considération dans le calcul la courbe caractéristique de débit de la valve et le comportement de transmission de la valve.

12. Une commande conforme à une des revendications précédentes, **caractérisée en ce que** la valeur consigne de la position de l'entraînement est calculée à partir de la valeur consigne de l'accélération ou de la vitesse et sauvegardée dans une mémoire circulaire, laquelle correspond au moins à la constante de temps du système, avant que la valeur consigne de la position ne soit transmise à une boucle d'asservissement et que le signal de sortie de la boucle d'asservissement de soit transmis pour la correction au travers d'un élément sommateur à la seconde entrée de valeur consigne.

13. Une commande conforme à une des revendications précédentes, **caractérisée en ce que** la valeur consigne de la position, de la force ou de la pression de l'entraînement est calculée et sauvegardée dans une mémoire circulaire, laquelle correspond au moins à la constante de temps (TS) du système, avant que la valeur consigne de la position, de la force ou de la pression ne soit transmise à une boucle d'asservissement et que le signal de sortie (1) de la boucle d'asservissement ne soit transmis pour la correction au travers d'un élément sommateur (10) à une entrée (2) supplémentaire de valeur consigne.

14. Une commande conforme à une des revendications précédentes, **caractérisée en ce que** l'entraînement est constitué d'un ou de plusieurs entraînements (Z) hydrauliques.

15. Une commande conforme à une des revendications précédentes, cependant que l'entraînement est constitué de plusieurs vérins de travail ou moteurs de travail, **caractérisée en ce que** pour chacun des vérins de travail, individuellement, ses valeurs d'état et ses paramètres nécessaires au calcul de la valeur consigne sont calculés à partir d'une géométrie du mouvement dans l'espace.

16. Une commande conforme à une des revendications précédentes, **caractérisée en ce que** le fluide de travail est constitué d'huile hydraulique.

17. Une commande conforme à une des revendications précédentes, **caractérisée en ce que** les signaux de valeur consigne transmis à la valve sont calculés en mode numérique et transmis en tant que signaux de commande à la valve au travers d'un convertisseur numérique-analogique.

18. Une commande conforme à une des revendications précédentes, **caractérisée en ce que** les signaux de pression captés en mode analogique sont transmis à l'ordinateur sous forme de signaux transformés en mode numérique.

19. Une commande conforme à la revendication n° 1, **caractérisée en ce que** le temps de calcul est constant pour les sections de valeur consigne individuelles du profil de variation de la courbe de valeur consigne.

20. Une commande conforme à la revendication n° 1, **caractérisée en ce que** les opérations de calcul sont effectuées par des ordinateurs (R) branchés en parallèle.

21. Une commande conforme à une des revendications précédentes, **caractérisée en ce que** lorsqu'apparaît une différence de valeur consigne et valeur réelle de la boucle d'asservissement de la course, de la force ou de la pression qui dépasse une valeur autorisée, elle est ramenée progressivement au fil de plusieurs sections de valeur consigne à la valeur autorisée ou l'erreur est diminuée selon le cas.

22. Une commande conforme à une des revendications précédentes, **caractérisée en ce que** le calcul de la valeur consigne de la valve, laquelle est générée par l'ordinateur (R) en fonction de la valeur consigne du vérin, est basé sur une valeur mesurée ou simulée située en arrière dans le temps à hauteur de la constante de temps (TS) du système de commande.

23. Une commande conforme à la revendication n° 22, **caractérisée en ce que** des étapes de calcul (A, B, C) présentant plusieurs intervalles de temps (n) identiques sont effectuées sur la base des valeurs (a, b, c) correspondantes mesurées ou simulées dans la plage de temps de la constante de temps (TS) du système de commande.

24. Une commande conforme aux revendications n^{os} 20 et 21, **caractérisée en ce que** le profil de variation de la courbe de valeur consigne de l'entraînement situé hors de la plage de la constante de temps (TS) de l'entraînement prévue pour le calcul dans le sens d'une anticipation du profil de variation de la valeur consigne est également pris en compte dans le calcul de la valeur consigne de la valve effectué avec une périodicité égale à la constante de temps.
